# EUROPEAN PATENT APPLICATION

(11) **EP 1 818 765 A2**
(43) Date of publication of application: **15.08.2007**
(21) Application number: 07001666.2
(22) Date of filing: 26.01.2007
(51) Int. Cl.: G06F 3/023

(54) **Character input apparatus and method of portable terminal**

(30) Priority: 08.02.2006 KR 20060012277
(71) Applicant: Samsung Electronics Co., Ltd., Suwon-si, Gyeonggi-Do (KR)
(72) Inventor: Kang, Hyuck-In, Bundang-gu Sengnam-si Gyeonggi-do (KR)
(74) Representative: Boakes, Jason Carrington

(57) **Abstract**

A character input method of a portable terminal includes detecting a pressing of a character button; determining if the detected character button is pressed together with a select button; and inputting a character corresponding to the select button among characters assigned to the detected character button according to an alphabet input mode when the detected character button is pressed together with the select button.

## Description

The present invention relates generally to a portable terminal, and in particular, but not exclusively, to a character input apparatus and method using a select button in a portable terminal.

As technology rapidly advances, portable terminals having a wireless voice communication function and a wireless data exchange function are becoming necessities.

The portable terminals have been regarded as devices that are easy to carry and can provide wireless communication. However, with the development of technology and the introduction of the wireless Internet, the application range of the portable terminals is increasing. For example, the portable terminals provide a phone call function, a scheduling function, an image photographing function using a built-in digital camera, a satellite broadcasting service, a game function, a web surfing function through wireless internet connections, and so on.

A character input service is frequently used in the portable terminal. For example, the character input service is used to create a text message, to input schedule data, and to input a file name of an image photographed using a built-in digital camera of the portable terminal.

A conventional portable terminal includes a 3x4 keypad. A plurality of characters are assigned to each button of the 3x4 keypad. Therefore, the different characters are input according to how many times the button is pressed in a predefined order.

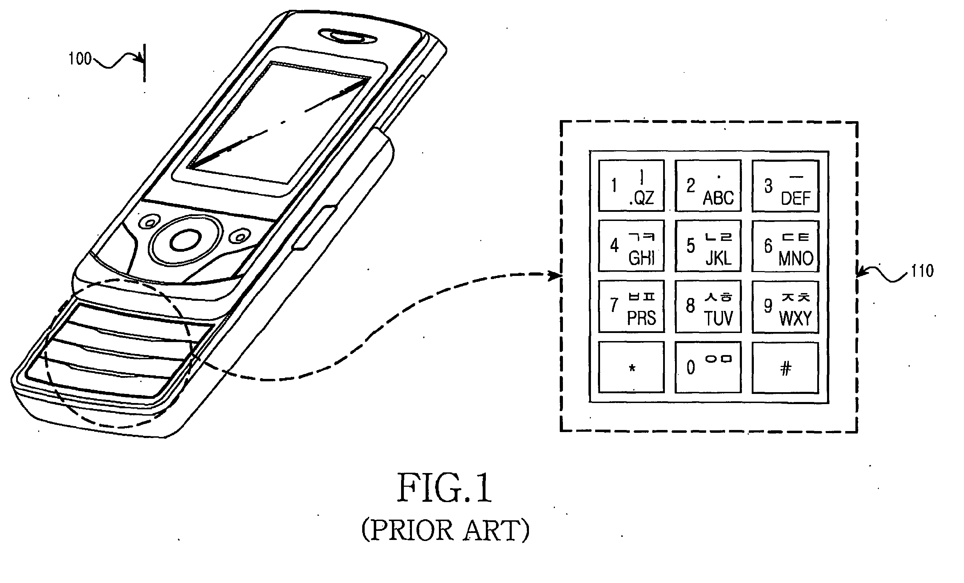

FIG. 1 illustrates a character arrangement of a keypad in a portable terminal.

Referring to FIG. 1, a portable terminal includes a 3x4 keypad 110 and a plurality of function keys (not shown), such as a Menu key, a Cancel (Delete) key, a Confirmation key, a Talk key, an End key, an Internet connection key, and Navigation keys (▲/▼/◄/►), to provide key input data that corresponds to a key pressed by a user to the control unit.

The 3x4 keypad 110 includes twelve buttons for inputting the Korean alphabet, the English alphabet, and numbers of 0-9.

According to the conventional character input method, since three characters are assigned to each button, the user must press the button for up to three times in order to input a character. In addition, when the user wants to input the same character, he or she must wait for a while after the corresponding character is input one time. That is, in order to input Z, C, F, I, L, O, S, V and Y assigned as the third character of the corresponding buttons, the user must press the corresponding buttons three times. Moreover, in order to continuously input the same character, the user must move a cursor using a directional key disposed outside of the 3×4 keypad.

For example, when the user inputs a word "school", he or she must sequentially press 7, 7, 7, 2, 2, 2, 4, 4, 6, 6, 6, and press the directional key or wait for a while, and then press 6, 6, 6, 5, 5, 5. That is, the input of the word "school" requires the pressing of the buttons seventeen or eighteen times.

Since the available buttons are limited in the 3x4 keypad 110, the user must press the buttons several times to input consonants, vowels, and alphabet. Also, when the same consonant, vowel and alphabet are continuously input, or when a sequential consonant, vowel and alphabet are input using a single button, the user must wait for a while or manipulate the directional keys.

The best method for solving the problems is to use a keypad (e.g., a QWERTY keyboard) having a complete character set. However, applying this method to a small-sized portable terminal is almost impossible in terms of space utilization.

Since users tend to favor a simple portable terminal, a 3x4 keypad is generally used. However, the 3×4 keypad is inconvenient to input characters because the available buttons are limited.

Therefore, there is a demand for a method that can input characters through small number of key inputs in the existing 3x4 keypad.

It is an aim of the present invention to at least partially mitigate the above-mentioned problems.

It is an aim of embodiments of the present invention to substantially solve at least the above problems and/or disadvantages and to provide at least the advantages below. Accordingly, an aim of embodiments of the present invention is to provide a character input method using a select button in a portable terminal.

Another aim of embodiments of the present invention is to provide a character input method that inputs a character using two select buttons. Specifically, a character assigned to a button is input according to the order of pressing the select buttons.

According to a first aspect of the present invention there is provided a character input method of a portable terminal, comprising the steps of:
detecting a pressing of a character button;
determining if the detected character button is pressed together with a select button; and
inputting a character corresponding to the select button from among characters assigned to the detected character button according to an alphabet input mode when the detected character button is pressed together with the select button.

Preferably the method further comprises inputting a first character among the characters assigned to the detected character button according to the alphabet input mode when only the character button is pressed.

Conveniently the character button includes one of a plurality of characters and a number of select buttons is 1 less than a maximum number of the characters.

Advantageously a number of the characters assigned to the character button is less than or equal to three and a number select buttons is two.

Preferably the alphabet input mode includes a Korean alphabet input mode and an English alphabet input mode.

Conveniently the portable terminal includes a first select button and a second select button and, in a Korean alphabet input mode, the first select button selects a second character assigned to the detected character button and the second select button selects a fortis consonant of a first character assigned to the detected character button.

Advantageously the portable terminal includes a first select button and a second select button and, in an English alphabet input mode, the first select button selects a second character assigned to the detected character button and the second select button selects a third character assigned to the detected character button.

Preferably the first select button is a " * " button disposed at a left lowermost portion of a 3x4 keypad, and the second select button is a " # " button disposed at a right lowermost portion of the 3×4 keypad.
Conveniently the first select button is a " * " button disposed at a left lowermost portion of a 3x4 keypad, and the second select button is a " # " button disposed at a right lowermost portion of the 3×4 keypad.

According to a second aspect of the present invention there is provided a character input apparatus of a portable terminal, comprising:
a keypad including character buttons each having a plurality of characters, and at least one select button for selecting one of the characters assigned to the character buttons; and
a controller for inputting a character corresponding to a select button from among the characters assigned to the character button according to an alphabet input mode when the character button is pressed together with the select button.

Preferably the controller inputs a first character from among the characters assigned to the character button according to the alphabet input mode when only the character button is pressed.

Conveniently the character button includes a plurality of characters and the number of select buttons is 1 less than a maximum number of the characters.

Advantageously a number of the characters assigned to the character button is less than or equal to three and the number of select buttons is two.

Preferably the alphabet input mode includes one of a Korean alphabet input mode and an English alphabet input mode.

Conveniently the apparatus includes a first select button and a second select button and, in a Korean alphabet input mode, the first select button selects a second character assigned to the detected character button and the second select button selects a fortis consonant of a first character assigned to the detected character button.

Advantageously the apparatus includes a first select button and a second select button and, in an English alphabet input mode, the first select button selects a second character assigned to the detected character button and the second select button selects a third character assigned to the detected character button.

Preferably the first select button is a " * " button disposed at a left lowermost portion of a 3×4 keypad, and the second select button is a " # " button disposed at a right lowermost portion of the 3×4 keypad.

Conveniently the first select button is a " * " button disposed at a left lowermost portion of a 3×4 keypad, and the second select button is a " # " button disposed at a right lowermost portion of the 3×4 keypad.

According to a third aspect of the present invention there is provided a character input method of a portable terminal, comprising the steps of:
detecting a sensing of a character input means and a select means; and
inputting a character corresponding to the select means from among characters assigned to the sensed character input means.

According to a fourth aspect of the present invention there is provided a portable terminal, comprising:
an input means including character input elements each having a plurality of characters, and at least one select means for selecting one of the characters assigned to the character input elements; and
a controlling means for inputting a character corresponding to a select means from among the characters assigned to the character input elements when the character input element is sensed together with the select means.

The above and other objects, features and advantages of the present invention will become more apparent from the following detailed description, given by way of example only, when taken in conjunction with the accompanying drawings in which:
FIG. 1 illustrates a 3×4 keypad of a conventional portable terminal;
FIG. 2 is a block diagram of a portable terminal according to the present invention;
FIG. 3 is a flowchart illustrating a method for inputting the Korean alphabet when a portable terminal is in a Korean alphabet input mode according to the present invention;
FIG. 4 illustrates a 3×4 keypad for inputting the Korean alphabet in a portable terminal according to the present invention;
FIG. 5 is a flowchart illustrating a method for inputting the English alphabet when a portable terminal is in an English alphabet input mode according to the present invention; and
FIG. 6 illustrates a 3×4 keypad for inputting the English alphabet in a portable terminal according to the present invention.

Preferred embodiments of the present invention will be described herein below with reference to the accompanying drawings. In the following description, well-known functions or constructions are not described in detail since they would obscure the invention in unnecessary detail.

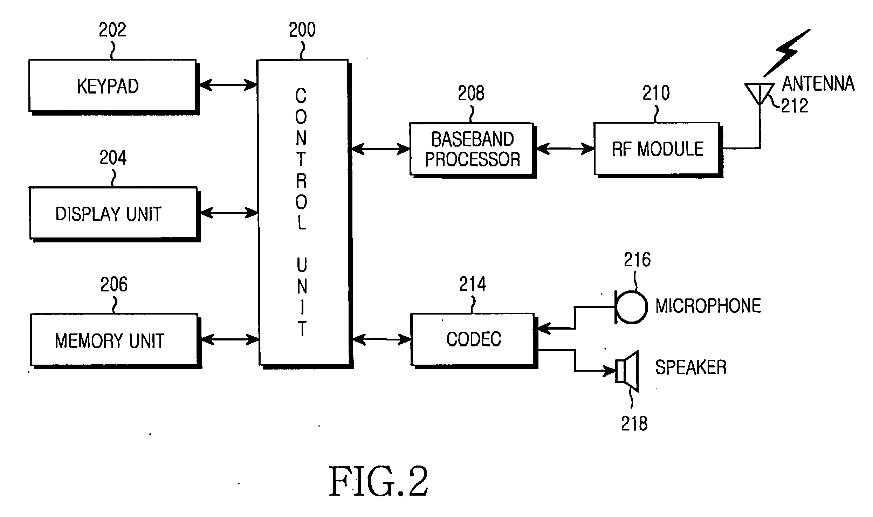

Hereinafter, a character input method of a portable terminal will be described in detail with reference to FIGs. 2 to 6. Specifically, one of the characters assigned to a button is input according to the order of pressing the select buttons.

FIG. 2 is a block diagram of a portable terminal according to the present invention. Examples of the portable terminal include cellular phones, Personal Communication System (PCS) phones, Personal Data Assistants (PDAs), and International Mobile Telecommunication-2000 (IMT-2000) terminals. The following description will be made with reference to the general structure of the listed terminals.

Referring to FIG. 2, the portable terminal includes a control unit (e.g., a microprocessor unit (MPU)) 200, a keypad 202, a display unit 204, a memory unit 206, a baseband processor 208, an RF module 210, an antenna 212, a coder-decoder (CODEC) 214, a microphone 216, and a speaker 218.

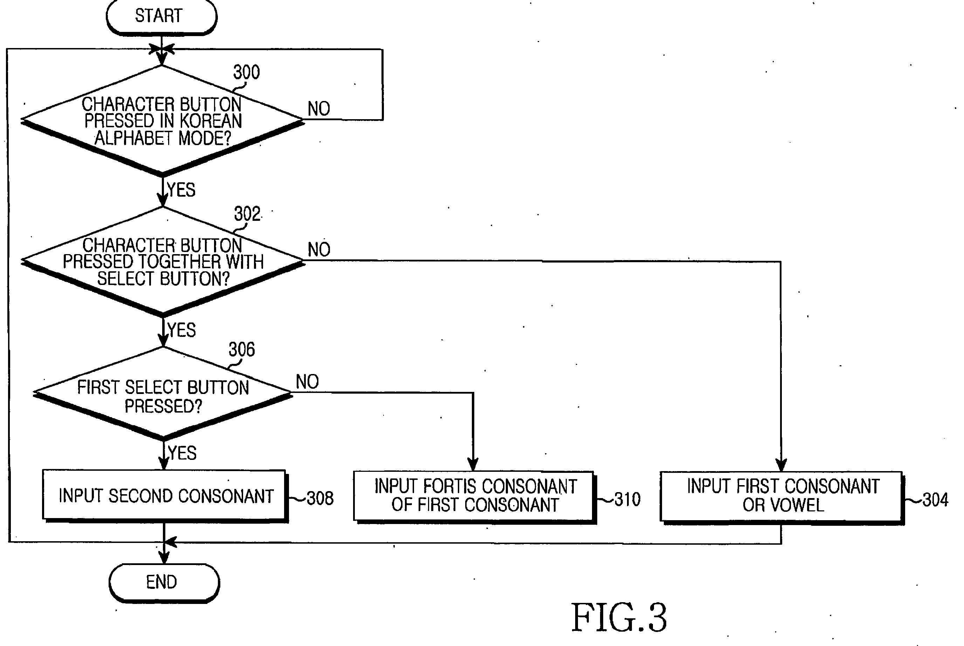

The control unit 200 controls an overall operation of the portable terminal. For example, the control unit 200 processes and controls voice communication and data communication. In addition to the general functions, the control unit 200 controls the input of characters using character buttons and select buttons according to an alphabet input mode. Specifically, when the character button and the select button are simultaneously pressed, a character corresponding to the select button from among characters assigned to the character button is input in the alphabet input mode. When only the character button is pressed, a first character from among the characters assigned to the character button is input in the alphabet input mode. A detailed description about the character input will be described later in detail with reference to FIGs. 3 to 6.

The keypad 202 includes numeric keys of digits 0-9 and a plurality of function keys, such as a Menu key, a Cancel (Delete) key, a Confirmation key, a Talk key, an End key, an Internet connection key, and Navigation keys (▲/▼/◄/►) to provide key input data that corresponds to a key pressed by a user to the control unit 200. In addition, the keypad 202 includes character buttons each having a plurality of characters and one or more select buttons for selecting one of the characters assigned to each character button.

The display unit 204 displays status information (or a status indicator) generated during operations, numerals and characters, moving pictures and still pictures, and so on. A color liquid crystal display (LCD) may be used as the display unit 204.

The memory unit 202 stores programs for controlling the overall operation of the portable terminal. Also, the memory unit 202 temporarily stores data generated during operations and backup data (e.g., telephone numbers, Short Message Service (SMS) messages, picture data, etc.).

The RF module 210 down-converts an RF signal received through the antenna 212 to provide the down-converted signal to the baseband processor 208, and up-converts a baseband signal from the baseband processor 208 to transmit the up-converted signal through the antenna 212. The baseband processor 208 processes a baseband signal that is transmitted or received between the RF module 210 and the control unit 200. For example, during transmission, the baseband processor 208 channel-codes and spreads data to be transmitted. During a reception operation, the baseband processor 208 despreads and channel-decodes a received signal.

The CODEC 214 is connected to the control unit 200, and the microphone 216 and the speaker 218 are connected to the CODEC 214. The CODEC 214, the microphone 216, and the speaker 218 serve as an audio input/output block for voice communication. The CODEC 214 converts Pulse Code Modulation (PCM) data provided from the controller 200 into an analog audio signal and outputs the analog audio signal through the speaker 218. Also, the CODEC 214 converts an audio signal received through the microphone 216 into PCM data and provides the PCM data to the control unit 200.

Hereinafter, a character input method using a select button in the portable terminal according to the present invention will be described in detail with reference to FIGs. 3 to 6.

FIG. 3 is a flowchart illustrating a method for inputting the Korean alphabet when the portable terminal is in a Korean alphabet input mode according to the present invention.

Referring to FIG. 3, the control unit 200 determines in step 300 if a character button is pressed in the Korean alphabet input mode.

When it is determined that the character button is pressed, the control unit 200 determines in step 302 if the character button is pressed together with a select button.

When it is determined that the select button is not pressed in step 302, a first character assigned to the pressed character button is inputted in the Korean alphabet input mode in step 304.

When it is determined that the character button is pressed together with the select button in step 302, the control unit 200 determines in step 306 if the pressed select button is a first select button.

When it is determined that the pressed select button is the first select button in step 306, a second character assigned to the pressed character button is input in the Korean alphabet input mode in step 308.

When it is determined that the pressed select button is not the first select button but a second select button in step 306, a fortis consonant of the first character assigned to the pressed character button is inputted in the Korean alphabet input mode in step 310. The fortis consonants of the Korean alphabet are "┐┐", "⊏⊏", " 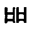 ", " 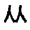 ", and " 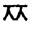 ".

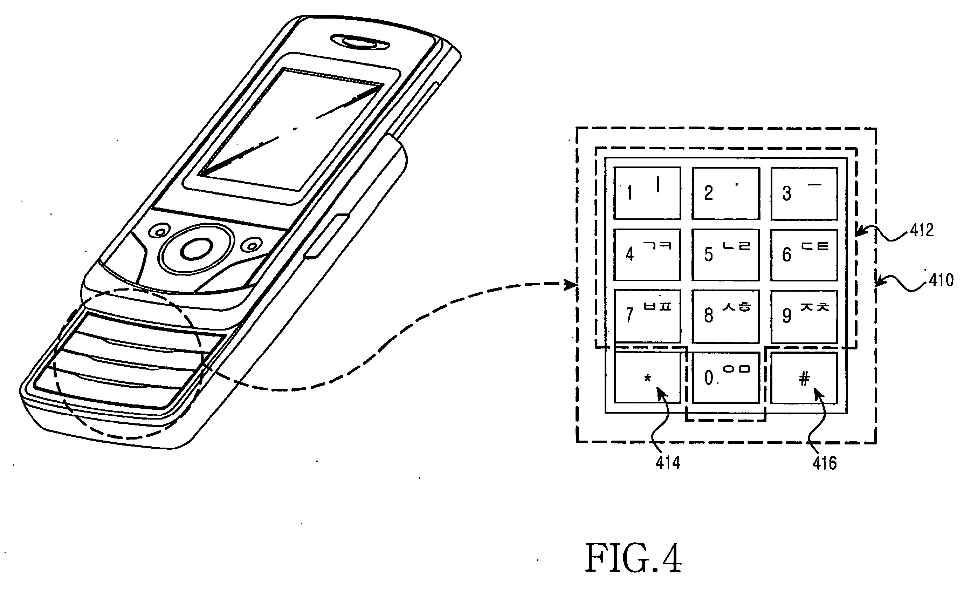

FIG. 4 illustrates a 3x4 keypad for inputting the Korean alphabet in the portable terminal according to the present invention.

Referring to FIG. 4, the 3x4 keypad 410 for inputting the Korean alphabet includes ten character buttons 412, a first select button 414, and a second select button 416. A maximum of three characters are assigned to each of the character buttons. When one of the character buttons 412 is pressed, a first character assigned to the pressed character button is input. When the first select button 414 is pressed together with the character button, a second character (consonant) assigned to the pressed character button is input. When the second select button 416 is pressed together with the character button, a fortis consonant of the first character assigned to the pressed character button is input.

Table 1 below shows the characters input using the 3x4 keypad of FIG. 4.

**Table 1**

| Button number | Character button +No select button | Character button + First select button (414) | Character button+ Second select button (416) |
|---|---|---|---|
| 1 | \| (vowel) | unassigned | Unassigned |
| 2 | · (vowel) | unassigned | Unassigned |
| 3 | ― (vowel) | unassigned | Unassigned |
| 4 | ┐ | 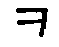 | 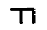 |
| 5 | L | 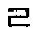 | Unassigned |
| 6 | ⊏ | E | ⊏⊏ |
| 7 | 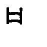 | 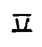 | 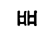 |
| 8 | 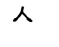 | 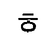 | 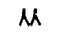 |
| 9 | 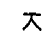 | 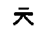 | 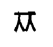 |
| 0 | ○ | □ | Unassigned |

In the 3x4 keypad 410 of FIG. 4, the select buttons 414 and 416 may be disposed anywhere within the keypad and the arrangement of the characters assigned to the character buttons 412 can also be changed.

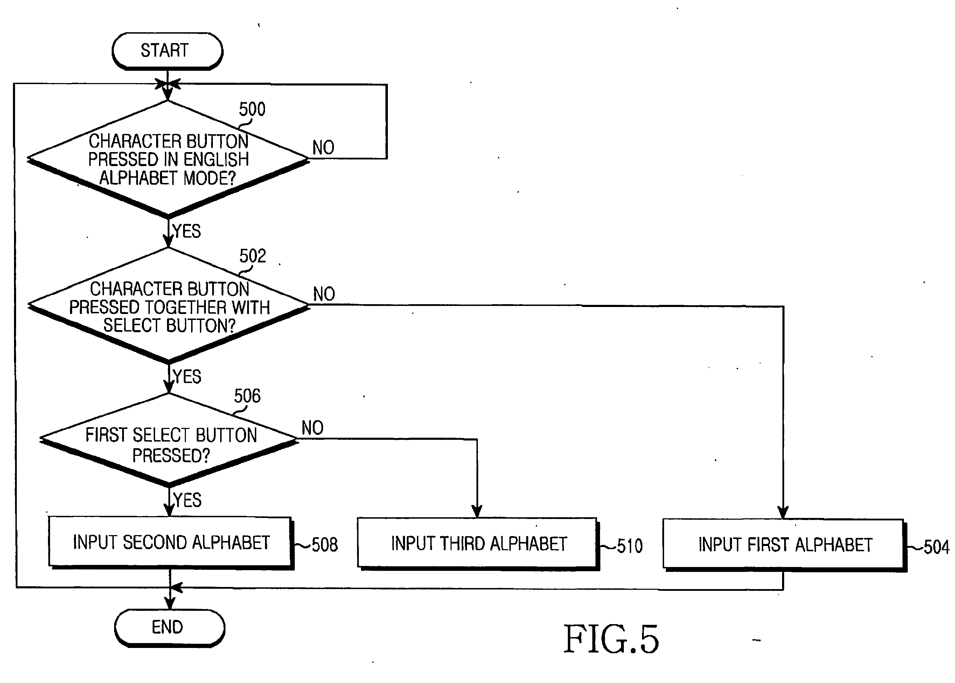

FIG. 5 is a flowchart illustrating a method for inputting the English alphabet when the portable terminal is in an English alphabet input mode according to the present invention.

Referring to FIG. 5, the control unit 200 determines in step 500 if a character button is pressed in the English alphabet input mode.

When it is determined that the character button is pressed, the control unit 200 determines in step 502 if the character button is pressed together with a select button.

When it is determined that the select button is not pressed in step 502, a first alphabet assigned to the pressed character button is input in the English alphabet input mode in step 504.

When it is determined that the character button is pressed together with the select button in step 502, the control unit 200 determines in step 506 if the pressed select button is a first select button.

When it is determined that the pressed select button is the first select button in step 506, a second alphabet assigned to the pressed character button is input in the English alphabet input mode in step 508.

When it is determined that the pressed select button is not the first select button but a second select button in step 506, a third alphabet assigned to the pressed character button is input in the English alphabet input mode in step 510.

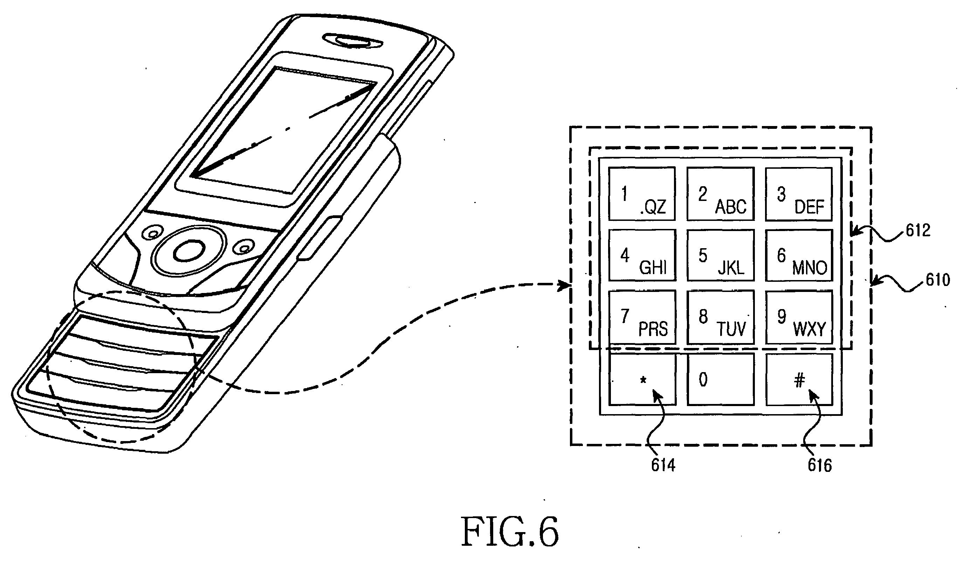

FIG. 6 illustrates a 3x4 keypad for inputting the English alphabet in the portable terminal according to the present invention.

Referring to FIG. 4, the 3x4 keypad 610 for inputting the English alphabet includes nine character buttons 612, a first select button 614, and a second select button 616. A maximum of three characters are assigned to each of the character buttons 612. When one of the character buttons 412 is pressed, a first alphabet assigned to the pressed character button is input. When the first select button 414 is pressed together with the character button, a second alphabet assigned to the pressed character button is input. When the second select button 416 is pressed together with the character button, a third alphabet assigned to the pressed character button is input.

Table 2 below shows the characters inputted using the 3×4 keypad of FIG. 5.

**Table 2**

| Button number | Character button + No select button | Character button + First select button (614) | Character button + Second select button (616) |
|---|---|---|---|
| 1 | · | Q | Z |
| 2 | A | B | C |
| 3 | D | E | F |
| 4 | G | H | I |
| 5 | J | K | L |
| 6 | M | N | O |
| 7 | P | R | S |
| 8 | T | U | V |
| 9 | W | X | Y |
| 0 | (blank) | unassigned | Unassigned |

In the 3×4 keypad 610 of FIG. 6, the select buttons 614 and 616 may be disposed anywhere within the keypad and the arrangement of the alphabets assigned to the character buttons 612 can also be changed.

In the above-described embodiments, maximum three characters are assigned to each character button and two select buttons are used. However, the keypad according to the present invention can have the select buttons less than the maximum number of the assigned characters by 1. In addition, the alphabet input mode includes all alphabet input modes that are available using the 3x4 keypad, as well as the Korean alphabet mode and the English alphabet mode. The position of the select buttons and the arrangement and number of the characters assigned to the character buttons can be changed in various ways within the scope of the present invention.

As described above, the characters assigned to the character buttons can be input without pressing the corresponding buttons many times. Moreover, when the characters assigned to the same character button are successively input, they can be rapidly input without using the directional key or waiting for a predetermined time.

While the invention has been shown and described with reference to certain preferred embodiments thereof, it will be understood by those skilled in the art that various changes in form and details may be made therein without departing from the spirit and scope of the invention as defined by the appended claims.

## Claims

1. A character input method of a portable terminal, comprising the steps of:
detecting a pressing of a character button;
determining if the detected character button is pressed together with a select button; and
inputting a character corresponding to the select button from among characters assigned to the detected character button according to an alphabet input mode when the detected character button is pressed together with the select button.

2. The character input method of claim 1, further comprising inputting a first character among the characters assigned to the detected character button according to the alphabet input mode when only the character button is pressed.

3. The character input method of claim 1 or claim 2, wherein the character button includes one of a plurality of characters and a number of select buttons is 1 less than a maximum number of the characters.

4. The character input method of any preceding claim, wherein a number of the characters assigned to the character button is less than or equal to three and a number select buttons is two.

5. The character input method of any preceding claim, wherein the alphabet input mode includes a Korean alphabet input mode and an English alphabet input mode.

6. The character input method of any preceding claim, wherein the portable terminal includes a first select button and a second select button and, in a Korean alphabet input mode, the first select button selects a second character assigned to the detected character button and the second select button selects a fortis consonant of a first character assigned to the detected character button.

7. The character input method of any one of claims 1 to 5, wherein the portable terminal includes a first select button and a second select button and, in an English alphabet input mode, the first select button selects a second character assigned to the detected character button and the second select button selects a third character assigned to the detected character button.

8. The character input method of claim 6, wherein the first select button is a " * " button disposed at a left lowermost portion of a 3x4 keypad, and the second select button is a " # " button disposed at a right lowermost portion of the 3x4 keypad.

9. The character input method of claim 7, wherein the first select button is a " * " button disposed at a left lowermost portion of a 3x4 keypad, and the second select button is a " # " button disposed at a right lowermost portion of the 3x4 keypad.

10. A character input apparatus of a portable terminal, comprising:
a keypad including character buttons each having a plurality of characters, and at least one select button for selecting one of the characters assigned to the character buttons; and
a controller for inputting a character corresponding to a select button from among the characters assigned to the character button according to an alphabet input mode when the character button is pressed together with the select button.

11. The character input apparatus of claim 10, wherein the controller inputs a first character from among the characters assigned to the character button according to the alphabet input mode when only the character button is pressed.

12. The character input apparatus of claim 10 or claim 11, wherein the character button includes a plurality of characters and the number of select buttons is 1 less than a maximum number of the characters.

13. The character input apparatus of any one of claims 10 to 12, wherein a number of the characters assigned to the character button is less than or equal to three and the number of select buttons is two.

14. The character input apparatus of any one of claims 10 to 13 10, wherein the alphabet input mode includes one of a Korean alphabet input mode and an English alphabet input mode.

15. The character input apparatus of any one of claims 10 to 14, wherein the apparatus includes a first select button and a second select button and, in a Korean alphabet input mode, the first select button selects a second character assigned to the detected character button and the second select button selects a fortis consonant of a first character assigned to the detected character button.

16. The character input apparatus of any one of claims 10 to 14, wherein the apparatus includes a first select button and a second select button and, in an English alphabet input mode, the first select button selects a second character assigned to the detected character button and the second select button selects a third character assigned to the detected character button.

17. The character input apparatus of claim 15, wherein the first select button is a " * " button disposed at a left lowermost portion of a 3x4 keypad, and the second select button is a " # " button disposed at a right lowermost portion of the 3x4 keypad.

18. The character input apparatus of claim 16, wherein the first select button is a " * " button disposed at a left lowermost portion of a 3x4 keypad, and the second select button is a " # " button disposed at a right lowermost portion of the 3x4 keypad.

19. A character input method of a portable terminal, comprising the steps of:
detecting a sensing of a character input means and a select means; and
inputting a character corresponding to the select means from among characters assigned to the sensed character input means.

20. A portable terminal, comprising:
an input means including character input elements each having a plurality of characters, and at least one select means for selecting one of the characters assigned to the character input elements; and
a controlling means for inputting a character corresponding to a select means from among the characters assigned to the character input elements when the character input element is sensed together with the select means.
